# EUROPEAN PATENT APPLICATION

(11) **EP 4 235 893 A1**
(43) Date of publication of application: **30.08.2023**
(21) Application number: 21885007.1
(22) Date of filing: 21.10.2021
(51) Int. Cl.: H01M 10/0525

(54) **ELECTROCHEMICAL DEVICE AND ELECTRONIC DEVICE COMPRISING SAME**

(30) Priority: 27.10.2020 CN 202011162479
(71) Applicant: Ningde Amperex Technology Limited, Zhangwan Town, Jiaocheng District Ningde City Fujian 352100 (CN)
(72) Inventor: ZHANG, Shuirong, Ningde City, Fujian 352100 (CN); LIU, Junfei, Ningde, Fujian 352100 (CN); TANG, Chao, Ningde City, Fujian 352100 (CN)
(74) Representative: Icosa
(86) International application number: PCT/CN2021/125148
(87) International publication number: WO 2022/089280

(57) **Abstract**

This application relates to an electrochemical device and an electronic device containing same. Specifically, the electrochemical device includes a positive electrode, a negative electrode, a separator, and an electrolytic solution. The negative electrode includes a negative active material layer. The negative active material layer includes a silicon material. The electrolytic solution includes fluorocarbonate and cyclic ether. A weight percent of the fluorocarbonate, a weight percent of the cyclic ether, and a unit reaction area of the negative active material layer satisfy a specific relational expression, thereby improving the high-temperature storage performance and the high-temperature cycle performance of the electrochemical device.

## Description

### TECHNICAL FIELD

This application relates to the technical field of energy storage, and in particular, to an electrochemical device and an electronic device containing same.

### BACKGROUND

In recent years, due to a high energy density and high cycle performance, electrochemical devices such as a lithium-ion battery, have attracted much attention. The lithium-ion battery has been widely used in various fields, especially in electronic consumer products. As thinner and lighter electronic products are favored in the market, higher requirements are imposed on the energy density of the battery. Silicon possesses a high capacity. The specific capacity of crystalline silicon in a fully intercalated state is up to 4200 mAh/g (Li4.4Si). Therefore, the silicon material has attracted extensive attention in recent years. However, the volume expansion of the silicon material in a charge and discharge process impairs a formed solid electrolyte interphase (SEI) film, and gives rise to repeated side reactions between an electrolytic solution and a silicon negative electrode material, thereby deteriorating the performance of the lithium-ion battery.

Currently, how to mitigate the performance deterioration of the lithium-ion battery caused by the silicon negative electrode material is an urgent tough problem to be solved in the industry.

### SUMMARY

This application provides an electrochemical device in an attempt to solve at least one problem in the related art to at least some extent. An embodiment of this application further provides an electronic device containing the electrochemical device.

According to one aspect, this application provides an electrochemical device. The electrochemical device includes a negative active material containing a silicon material and an electrolytic solution containing fluorocarbonate and cyclic ether. By controlling a weight percent of the fluorocarbonate, a weight percent of the cyclic ether, and a unit reaction area of a negative active material layer to satisfy a specific relational expression, this application can improve the high-temperature storage performance and the high-temperature cycle performance of the electrochemical device, thereby solving the tough problem of performance deterioration of the electrochemical device that uses a silicon negative electrode material.

According to another aspect, this application provides an electrochemical device. The electrochemical device includes a negative active material containing a silicon material and an electrolytic solution containing fluorocarbonate and cyclic ether. By controlling the corresponding content of the cyclic ether per gram of silicon in the negative active material, this application can effectively improve the cycle performance of the electrochemical device under a normal temperature.

This application provides an electrochemical device. In some embodiments, the electrochemical device includes a positive electrode, a negative electrode, a separator, and an electrolytic solution. The negative electrode includes a negative active material layer. The negative active material layer includes a silicon material. A unit reaction area of the negative active material layer is C m²/cm². The electrolytic solution includes fluorocarbonate and cyclic ether. Based on a total weight of the electrolytic solution, a weight percent of the fluorocarbonate is A%, and a weight percent of the cyclic ether is B%, where, A, B, and C satisfy 15 ≤ (A+B)/C ≤ 5600.

According to some embodiments of this application, A% is 2% to 25%, and B% is 0.05% to 3%.

According to some embodiments of this application, B/A is 0.005 to 0.5.

According to some embodiments of this application, the cyclic ether includes a compound represented by Formula I: 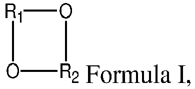 where R₁ and R₂ each are independently selected from substituted or unsubstituted C₁ to C₁₀ alkylidenes, in which a substituent for substitution is at least one selected from a halogen atom or a C₁ to C₅ alkyl.

According to some embodiments of this application, the cyclic ether includes at least one of:

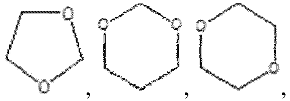

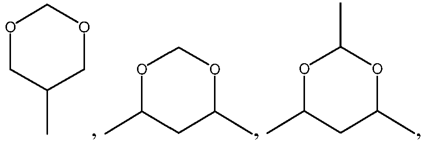

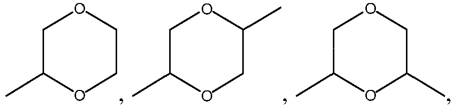

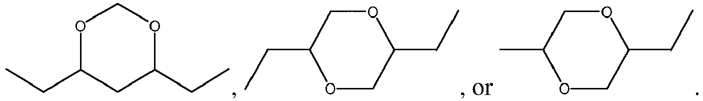

According to some embodiments of this application, the fluorocarbonate includes at least one of fluoroethylene carbonate or bisfluoroethylene carbonate.

According to some embodiments of this application, content of the cyclic ether corresponding to 1 gram of silicon in the negative active material layer is 0.003 gram to 0.3 gram.

According to some embodiments of this application, the silicon material includes a silicon composite substrate and a protection layer, and the protection layer is disposed on at least a part of a surface of the silicon composite substrate.

According to some embodiments of this application, the protection layer includes at least one of carbon or MeₓO_{y}, where Me includes at least one of Al, Si, Ti, Mn, V, Cr, Co, or Zr; x is 1 to 3; and y is 1 to 3.

According to some embodiments of this application, the silicon composite substrate includes at least one of silicon oxide or silicon.

According to some embodiments of this application, the silicon composite substrate includes SiO_{z}, where 0.5 < z < 1.5.

According to some embodiments of this application, a thickness of the protection layer is 1 nm to 900 nm.

According to some embodiments of this application, the negative active material layer includes carbon nanotubes, a diameter of the carbon nanotubes is 1 nm to 10 nm, and a length of the carbon nanotubes is 1 µm to 50 µm.

Another aspect of this application provides an electronic device. The electronic device includes any one of the electrochemical devices described above.

Additional aspects and advantages of some embodiments of this application will be partly described or illustrated later herein or expounded through implementation of some embodiments of this application.

### DETAILED DESCRIPTION OF EMBODIMENTS

Some embodiments of this application will be described in detail below. Some embodiments described herein are illustrative in nature, and are intended to enable a basic understanding of this application. Some embodiments of this application are not to be construed as a limitation on this application.

The term "approximately" used herein is intended to describe and represent small variations. When used with reference to an event or situation, the terms may denote an example in which the event or situation occurs exactly and an example in which the event or situation occurs very approximately. For example, when used together with a numerical value, the term may represent a variation range falling within ±10% of the numerical value, such as ±5%, ±4%, ±3%, ±2%, ±1%, ±0.5%, ±0.1%, or ±0.05% of the numerical value. For example, if a difference between two numerical values falls within ±10% of an average of the numerical values (such as ±5%, ±4%, ±3%, ±2%, ±1%, ±0.5%, ±0.1%, or ±0.05% of the average), the two numerical values may be considered to be "approximately" the same.

In addition, a quantity, a ratio, or another numerical value is sometimes expressed in a range format herein. Understandably, such a range format is for convenience and brevity, and shall be flexibly understood to include not only the numerical values explicitly specified and defined in the range, but also all individual numerical values or sub-ranges covered in the range as if each individual numerical value and each sub-range were explicitly specified.

In some embodiments and claims, a list of items referred to by using the terms such as "at least one of", "at least one thereof", "at least one type of" or other similar terms may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single component or a plurality of components. The item B may include a single component or a plurality of components. The item C may include a single component or a plurality of components.

As referred to herein, the term "alkylidene" means a linear or branched divalent saturated hydrocarbyl. For example, an alkylidene may be an alkylidene with 1 to 20 carbon atoms, an alkylidene with 1 to 15 carbon atoms, an alkylidene with 1 to 10 carbon atoms, an alkylidene with 1 to 5 carbon atoms, an alkylidene with 5 to 20 carbon atoms, an alkylidene with 5 to 15 carbon atoms, or an alkylidene with 5 to 10 carbon atoms. Representative alkylidenes include (for example) methylene, ethane-1,2-diyl ("ethylene"), propane-1,2-diyl, propane-1,3-diyl, butane-1,4-diyl, pentane-1,5-diyl, and the like. In addition, the alkylidene may be optionally substituted.

As used herein, the term "halogen atom" may be F, Cl, Br, or I.

To increase the energy density of an electrochemical device, a negative electrode containing a silicon material may be used. However, the volume of the silicon material expands in a charge and discharge cycle. The expansion impairs a formed solid electrolyte interphase (SEI) film, thereby deteriorating the performance of the electrochemical device.

The inventor of this application finds that, in a discharge cycle after the electrochemical device is fully charged and stored under a high temperature, the fluorocarbonate can repair the SEI film after the silicon material is broken. However, the fluorocarbonate (such as fluoroethylene carbonate) is prone to decompose under a high temperature to form hydrogen fluoride (HF). The HF impairs the SEI film and the positive electrode material. Therefore, the high content of fluorocarbonate affects the high-temperature performance of the electrochemical device. The inventor further finds that the cyclic ether (such as dioxane ether) possesses a low oxidation potential and a high reduction potential, and can easily form a protection layer on a negative electrode and a positive electrode, thereby reducing the impact caused by the HF.

In addition, the inventor finds that in an electrochemical device that uses a silicon-containing negative electrode, the reaction area of the negative electrode affects the dosage of fluorocarbonate, and the cyclic ether can reduce adverse effects of high content of fluorocarbonate. Therefore, by letting the reaction area, the weight percent of the fluorocarbonate, and the weight percent of the cyclic ether satisfy a specific relationship, the discharge cycle performance can be improved after the electrochemical device is fully charged and stored under a high temperature.

This application provides an electrochemical device, including a positive electrode, a negative electrode, a separator, and an electrolytic solution. In the electrochemical device according to this application, the negative electrode includes a negative active material layer. The negative active material layer includes a silicon material. A unit reaction area of the negative active material layer is C m²/cm². The electrolytic solution includes fluorocarbonate and cyclic ether. Based on a total weight of the electrolytic solution, the weight percent of the fluorocarbonate is A%, and the weight percent of the cyclic ether is B%, where, A, B, and C satisfy 15 ≤ (A+B)/C ≤ 5600, thereby improving the cycle performance and the high-temperature storage performance of the electrochemical device that uses a silicon negative electrode material and that has been fully charged and stored under a high temperature.

### Electrochemical Device

An embodiment of this application relates to an electrochemical device. The electrochemical device includes a positive electrode, a negative electrode, a separator disposed between the positive electrode and the negative electrode, and an electrolytic solution. This embodiment of this application relates to an electrochemical device that includes a silicon negative electrode material. In some embodiments, the electrochemical device is a lithium-ion battery.

### Negative electrode

In some embodiments, the negative electrode includes a current collector and a negative active material layer located on the current collector. The negative active material layer includes a silicon material.

In some embodiments, the silicon material includes a silicon composite substrate and a protection layer. The protection layer is disposed on at least a part of a surface of the silicon composite substrate.

In some embodiments, the silicon composite substrate includes at least one of silicon oxide or silicon. In some embodiments, the silicon composite substrate includes SiO_{z}, where 0.5 < z < 1.5. In some embodiments, the silicon composite substrate includes at least one of nano-silicon crystal grains, SiO, or SiO₂. Silicon content in this application means the weight of silicon in the negative active material layer. Silicon content = weight percent of silicon × total weight of the negative active material layer. The weight percent of silicon may be obtained through a test such as an ICP test.

In some embodiments, the protection layer includes at least one of carbon or MeₓO_{y}, where Me includes at least one of Al, Si, Ti, Mn, V, Cr, Co, or Zr; x is 1 to 3; and y is 1 to 3. In some embodiments, the protection layer includes alumina.

In some embodiments, a thickness of the protection layer is approximately 1 nm to approximately 900 nm. In some embodiments, the thickness of the protection layer may be approximately 1 nm, approximately 5 nm, approximately 10 nm, approximately 50 nm, approximately 75 nm, approximately 100 nm, approximately 150 nm, approximately 200 nm, approximately 250 nm, approximately 300 nm, approximately 350 nm, approximately 400 nm, approximately 450 nm, approximately 500 nm, approximately 550 nm, approximately 600 nm, approximately 650 nm, approximately 700 nm, approximately 750 nm, approximately 800 nm, approximately 850 nm, approximately 900 nm, or may fall within a range formed by any two thereof, for example, fall within approximately 50 nm to approximately 500 nm or approximately 100 nm to approximately 900 nm.

In some embodiments, the negative active material layer includes carbon nanotubes. In some embodiments, a diameter of the carbon nanotubes may be approximately 1 nm to approximately 10 nm. In some embodiments, the diameter of the carbon nanotubes may be approximately 1 nm, approximately 2 nm, approximately 5 nm, approximately 7 nm, approximately 10 nm, or may fall within a range formed by any two thereof, for example, fall within approximately 1 nm to approximately 5 nm or approximately 5 nm to approximately 10 nm.

In some embodiments, a length of the carbon nanotubes may be approximately 1 µm to approximately 50 µm. In some embodiments, the length of the carbon nanotubes may be approximately 1 µm, approximately 5 µm, approximately 10 µm, approximately 15 µm, approximately 20 µm, approximately 25 µm, approximately 30 µm, approximately 35 µm, approximately 40 µm, approximately 45 µm, approximately 50 µm, or may fall within a range formed by any two thereof, for example, fall within approximately 1 µm to approximately 10 µm, approximately 10 µm to approximately 50 µm, or approximately 20 µm to approximately 50 µm.

In some embodiments, a carbon layer is disposed between the negative current collector and the negative active material layer. A thickness of the carbon layer is 0.3 µm to 1.5 µm. The carbon layer can improve the bonding force between the negative current collector and the negative active material layer as well as the conductivity performance thereof, thereby further mitigating the problem of lithium plating on the negative electrode of the electrochemical device.

In some embodiments, the negative active material layer includes a binder. In some embodiments, the binder includes, but is not limited to: polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, or nylon.

In some embodiments, the negative active material layer includes a conductive material. In some embodiments, the conductive material includes, but is not limited to: natural graphite, artificial graphite, carbon black, acetylene black, Ketjen black, carbon fiber, metal powder, metal fiber, copper, nickel, aluminum, silver, or a polyphenylene derivative.

In some embodiments, the negative active material layer may further include a conventional thickener, a filler, or the like.

In some embodiments, the current collector includes, but is not limited to: a copper foil, a nickel foil, a stainless steel foil, a titanium foil, foamed nickel, foamed copper, or a polymer substrate coated with a conductive metal.

In some embodiments, the negative electrode further includes a conductive layer. In some embodiments, a thickness of the conductive layer is approximately 0.3 µm to approximately 2 µm. The conductive material of the conductive layer may include any conductive material so long as the conductive material does not cause a chemical change. In some embodiments, the conductive material of the conductive layer may include at least one of: a carbon-based material (for example, natural graphite, artificial graphite, carbon black, acetylene black, Ketjen black, carbon fiber, carbon nanotubes, graphene, or the like), a metal-based material (for example, metal powder, metal fiber, or the like, such as copper, nickel, aluminum, silver, and the like), a conductive polymer (for example, a polyphenylene derivative), and any mixture thereof.

A unit reaction area of the negative active material layer is C m²/cm². The unit reaction area of the negative active material layer = weight per unit area of the negative active material layer × specific surface area (measured by a BET method) of the negative active material layer. In a case that the additives such as the binder, the conductive material, the thickener, and the filler are added into the negative active material that constitutes the negative active material layer, the BET specific surface area (m²/g) of the negative active material layer means the BET specific surface area of the negative active material layer as a whole containing the negative active material and the additives.

### Electrolytic solution

In some embodiments, an electrolytic solution according to this application includes fluorocarbonate and cyclic ether.

In some embodiments, the fluorocarbonate includes at least one of fluoroethylene carbonate (FEC) or bisfluoroethylene carbonate.

In some embodiments, the cyclic ether includes a compound represented by Formula I:

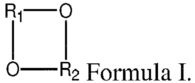

In Formula I, R₁ and R₂ each are independently selected from substituted or unsubstituted C₁ to C₁₀ alkylidenes, in which a substituent for substitution is at least one of a halogen atom or a C₁ to C₅ alkyl.

In some embodiments, the cyclic ether includes at least one of: 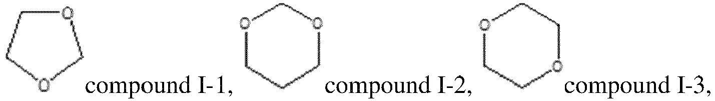 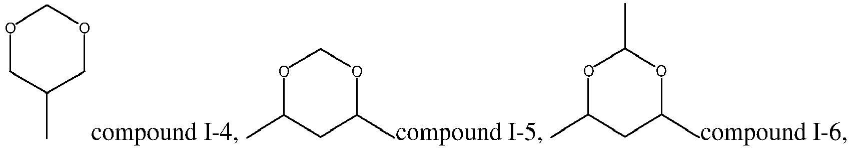 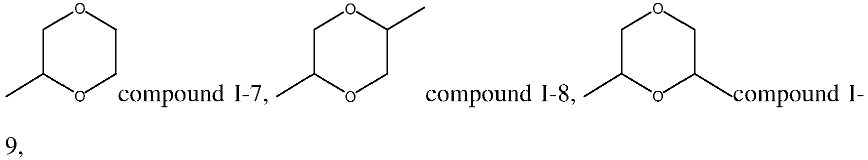 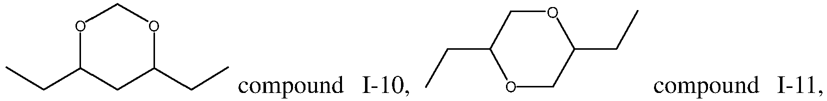 or

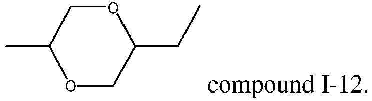

In some embodiments, based on the total weight of the electrolytic solution, the weight percent A% of the fluorocarbonate is approximately 2% to approximately 25%. In some embodiments, based on the total weight of the electrolytic solution, the weight percent A% of the fluorocarbonate may be approximately 2%, approximately 5%, approximately 7%, approximately 10%, approximately 12 %, approximately 15%, approximately 17%, approximately 20%, approximately 23%, approximately 25%, or may fall within a range formed by any two thereof, for example, fall within approximately 2% to approximately 10%, approximately 5% to approximately 15%, or approximately 10% to approximately 25%.

In some embodiments, based on the total weight of the electrolytic solution, the weight percent B% of the cyclic ether is approximately 0.05% to approximately 3%. In some embodiments, based on the total weight of the electrolytic solution, the weight percent B% of the cyclic ether may be approximately 0.05%, approximately 0.1%, approximately 0.15%, approximately 0.25%, approximately 0.5%, approximately 1.0%, approximately 1.5%, approximately 1.75%, approximately 2.0%, approximately 2.25%, approximately 2.5%, approximately 2.75%, approximately 3%, or may fall within a range formed by any two thereof, for example, fall within approximately 0.05% to approximately 1%, approximately 0.5% to approximately 1.5%, or approximately 1.0% to approximately 3%.

In some embodiments, a ratio of B to A is approximately 0.005 to approximately 0.5. In some embodiments, the ratio of B to A is approximately 0.005, approximately 0.01, approximately 0.05, approximately 0.1, approximately 0.15, approximately 0.2, approximately 0.25, approximately 0.3, approximately 0.35, approximately 0.4, approximately 0.45, approximately 0.5, or may fall within a range formed by any two thereof, for example, fall within approximately 0.005 to approximately 0.1, approximately 0.01 to approximately 0.5, or approximately 0.1 to approximately 0.5.

In some embodiments, the content of the cyclic ether corresponding to 1 gram of silicon in the negative active material is approximately 0.003 gram to approximately 0.3 gram. The inventor finds that, by controlling the content of the cyclic ether corresponding to 1 gram of silicon in the negative active material to be approximately 0.003 gram to 0.3 gram, the electrochemical device can achieve a relatively high capacity retention rate. In some embodiments, the content of the cyclic ether corresponding to 1 gram of silicon in the negative active material may be approximately 0.003 g, approximately 0.005 g, approximately 0.01 g, approximately 0.02 g, approximately 0.05 g, approximately 0.1 g, approximately 0.15 g, approximately 0.2 g, approximately 0.25 g, approximately 0.3 g, or may fall within a range formed by any two thereof, for example, fall within approximately 0.003 g to approximately 0.1 g, approximately 0.005 g to approximately 0.2 g, or approximately 0.1 g to approximately 0.3 g.

In some embodiments, the electrolytic solution may further include cyclic carbonate. In some embodiments, the cyclic carbonate includes at least one of ethylene carbonate (EC), propylene carbonate (PC), γ-butyrolactone (BL), or butylene carbonate.

In some embodiments, the electrolytic solution may further include chain ester. In some embodiments, the chain ester may include at least one of dimethyl carbonate (DMC), diethyl carbonate (DEC), ethyl methyl carbonate (EMC), ethyl propyl carbonate, methyl formate, methyl acetate, ethyl acetate, propyl acetate, isopropyl acetate, butyl acetate, sec-butyl acetate, isobutyl acetate, tert-butyl acetate, methyl propionate, propyl propionate, isopropyl propionate, methyl butyrate, ethyl butyrate, propyl butyrate, methyl isobutyrate, ethyl isobutyrate, methyl valerate, or ethyl valerate.

In some embodiments, the electrolytic solution may further include other additives to improve the performance of the electrochemical device. For example, in some embodiments, the electrolytic solution may include at least one of 1,3-propane sultone (PS), 1,4-butane sultone, vinylene carbonate (VC), or ethylene sulfate (DTD).

In some embodiments, the electrolytic solution may further include lithium salt. In some embodiments, the lithium salt may include: inorganic lithium salt, for example, LiClO₄, LiAsF₆, LiPF₆, LiBF₄, LiSbF₆, LiSO₃F, and LiN(FSO₂)₂; fluorine-containing organic lithium salt, for example, LiCF₃SO₃, LiN(FSO₂)(CF₃SO₂), LiN(CF₃SO₂)₂, LiN(C₂F₅SO₂)₂, cyclic 1,3-hexafluoropropane disulfonimide lithium, cyclic 1,2-tetrafluoroethane disulfonimide lithium, LiN(CF₃SO₂)(C₄F₉SO₂), LiC(CF₃SO₂)₃, LiPF₄(CF₃)₂, LiPF₄(C₂F₅)₂, LiPF₄(CF₃SO₂)₂, LiPF₄(C₂F₅SO₂)₂, LiBF₂(CF₃)₂, LiBF₂(C₂F₅)₂, LiBF₂(CF₃SO₂)₂, or LiBF₂(C₂F₅SO₂)₂; and lithium salt containing a dicarboxylic acid coordination complex, for example, lithium bis(oxalate) borate (LiBOB) or lithium difluoro(oxalate) borate (LiDFOB). In addition, one of the foregoing lithium salts may be used alone, or two or more thereof may be used simultaneously.

In some embodiments, a concentration of the lithium salt is approximately 0.8 mol/L to approximately 3 mol/L. In some embodiments, the concentration of the lithium salt may be approximately 0.8 mol/L, approximately 1.0 mol/L, approximately 1.2 mol/L, approximately 1.5 mol/L, approximately 1.7 mol/L, approximately 2.0 mol/L, approximately 2.5 mol/L, approximately 3 mol/L, or may fall within a range formed by any two thereof, for example, fall within approximately 0.8 mol/L to approximately 1.5 mol/L or approximately 0.8 mol/L to approximately 2 mol/L.

### Positive electrode

In some embodiments, the positive electrode includes a current collector and a positive active material layer located on at least one surface of the current collector. The positive active material layer includes a positive active material. The positive active material includes at least one lithiated intercalation compound that enables reversible intercalation and deintercalation of lithium ions. In some embodiments, the positive active material includes a composite oxide. In some embodiments, the composite oxide contains lithium and at least one element selected from cobalt, manganese, or nickel.

In some embodiments, the positive active material is selected from lithium cobalt oxide (LiCoO₂), a lithium nickel-cobalt-manganese (NCM) ternary material, lithium ferrous phosphate (LiFePO₄), lithium manganese oxide (LiMn₂O₄), or any combination thereof.

In some embodiments, the positive active material may be coated with a coating layer, or may be mixed with another compound coated with a coating layer. The coating layer may include at least one compound of a coating element, and the compound of a coating element is selected from: an oxide of a coating element, a hydroxide of a coating element, an oxyhydroxide of a coating element, an oxycarbonate of a coating element, and a hydroxycarbonate of a coating element. The compound used for the coating may be amorphous or crystalline.

In some embodiments, the coating element contained in the coating layer may include Mg, Al, Co, K, Na, Ca, Si, Ti, V, Sn, Ge, Ga, B, As, Zr, or F, or any combination thereof. The coating layer may be applied by using any method as long as the method does not adversely affect the performance of the positive active material. For example, the method may include any coating method well known in the art, such as spraying and infiltrating.

The positive active material layer further includes a binder, and optionally includes a conductive material. The binder improves the bonding between particles of the positive active material and the bonding between the positive active material and the current collector.

In some embodiments, the binder includes, but is not limited to: polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly (1,1-difluoroethylene), polyethylene, polypropylene, styrene-butadiene rubber, acrylic styrene-butadiene rubber, epoxy resin, nylon, or the like.

In some embodiments, the conductive material includes, but is not limited to, a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

In some embodiments, the current collector may be, but is not limited to, aluminum.

The positive electrode may be prepared according to a preparation method known in the art. For example, the positive electrode may be obtained according to the following method: mixing an active material, a conductive material, and a binder in a solvent to prepare an active material composite, and coating the active material composite onto the current collector. In some embodiments, the solvent may include, but is not limited to, N-methyl-pyrrolidone.

In some embodiments, the positive electrode is made of a positive electrode material formed by applying a positive active material layer onto the current collector, where the positive active material layer includes a lithium transition metal-based compound powder and a binder.

In some embodiments, the positive active material layer generally may be made by performing the following operations: dry-mixing the positive electrode material and the binder (as necessary, a conductive material, a thickener and the like) and making the mixture into a sheet, and crimping the obtained sheet onto the positive current collector; or, dissolving or dispersing the foregoing materials into a liquid medium to form a slurry, coating the positive current collector with the slurry, and drying the slurry. In some embodiments, the positive active material layer may be made of any material well known in the art.

### Separator

In some embodiments, the electrochemical device according to this application has a separator disposed between the positive electrode and the negative electrode to prevent short circuit. The material and the shape of the separator used in the electrochemical apparatus in this application are not particularly limited, and may be based on any technologies disclosed in the prior art. In some embodiments, the separator includes a polymer or an inorganic compound or the like formed from a material that is stable to the electrolytic solution according to this application.

For example, the separator may include a substrate layer and a surface treatment layer. The substrate layer is a non-woven fabric, film or composite film, which, in each case, have a porous structure. The material of the substrate layer is selected from at least one of polyethylene, polypropylene, polyethylene terephthalate, and polyimide. Specifically, the material of the substrate layer may be a polypropylene porous film, a polyethylene porous film, a polypropylene non-woven fabric, a polyethylene non-woven fabric, or a polypropylene-polyethylene-polypropylene porous composite film.

In some embodiments, a surface treatment layer is disposed on at least one surface of the substrate layer. The surface treatment layer may be a polymer layer or an inorganic compound layer, or a layer compounded of a polymer and an inorganic compound.

The inorganic compound layer includes inorganic particles and a binder. The inorganic particles are selected from a combination of one or more of alumina, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is selected from a combination of one or more of polyvinylidene fluoride, poly(vinylidene fluoride-co-hexafluoropropylene), polyamide, polyacrylonitrile, polyacrylate, polyacrylic acid, polyacrylate, polyvinylpyrrolidone, polyvinyl ether, poly methyl methacrylate, polytetrafluoroethylene, and polyhexafluoropropylene. The polymer layer includes a polymer. The material of the polymer includes at least one of polyamide, polyacrylonitrile, an acrylate polymer, polyacrylic acid, polyacrylate, polyvinylpyrrolidone, polyvinyl ether, polyvinylidene fluoride, or poly(vinylidene fluoride-co-hexafluoropropylene).

This application provides an electrochemical device. The electrochemical device includes the positive electrode, the negative electrode, the separator, and the electrolytic solution. The unit reaction area of the negative active material layer is C m²/cm². The relationship between C, the weight percent A% of the fluorocarbonate and the weight percent B% of the cyclic ether in the electrolytic solution satisfies 15 ≤ (A+B)/C ≤ 5600.

This application further provides an electrochemical device. The electrochemical device includes the positive electrode, the negative electrode, the separator, and the electrolytic solution. The unit reaction area of the negative active material layer is C m²/cm². The relationship between C, the weight percent A% of the fluorocarbonate and the weight percent B% of the cyclic ether in the electrolytic solution satisfies 15 ≤ (A+B)/C ≤ 5600, and the ratio of B to A is approximately 0.005 to approximately 0.5.

This application further provides an electrochemical device. The electrochemical device includes the positive electrode, the negative electrode, the separator, and the electrolytic solution. The unit reaction area of the negative active material layer is C m²/cm². The relationship between C, the weight percent A% of the fluorocarbonate and the weight percent B% of the cyclic ether in the electrolytic solution satisfies 15 ≤ (A+B)/C ≤ 5600, and the content of the cyclic ether corresponding to 1 gram of silicon in the negative active material is approximately 0.003 gram to approximately 0.3 gram.

### Electronic Device

The electrochemical device described in this application is applicable to electronic devices in various fields.

The electrochemical device according to this application may be used for purposes not particularly limited, and may be used for any purpose known in the prior art. In an embodiment, the electrochemical device according to this application is applicable to, but without limitation: a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game machine, a watch, an electric tool, a flashlight, a camera, a large household battery, a lithium-ion capacitor, and the like.

### Embodiments

The following describes this application in more detail with reference to some embodiments and comparative embodiments. However, this application is not limited to such embodiments, and other embodiments may be obtained without departing from the conception of this application.

### Preparing a lithium-ion battery

### (1) Preparing a positive electrode

Mixing lithium cobalt oxide (LiCoO₂), conductive carbon black, and polyvinylidene difluoride at a weight ratio of 97: 1.4: 1.6, adding N-methyl-pyrrolidone (NMP), and stirring the mixture with a vacuum blender until the system is homogeneous and transparent, so as to obtain a positive slurry, where the solid content of the positive slurry is 72 wt%; coating the positive current collector aluminum foil with the positive slurry; drying the aluminum foil under a temperature of 85 °C; and performing cold pressing, cutting, and slitting, and then drying for 4 hours under an 85 °C vacuum condition to obtain a positive electrode.

### (2) Preparing a negative electrode

Mixing artificial graphite, alumina-coated SiO (the weight ratio between the artificial graphite and the alumina-coated SiO is 85:15), conductive carbon black, sodium carboxymethyl cellulose (CMC), and styrene butadiene rubber (SBR) at a weight ratio of 96.2: 1.5: 0.5: 1.8, where the thickness of the alumina protection layer is approximately 15 nm. Adding deionized water, stirring with a vacuum blender to obtain a negative slurry, where the solid content of the negative slurry is 54 wt%; coating the negative current collector copper foil with the negative slurry evenly, where the surface of the copper foil is overlaid with a 1 µm-thick carbon layer; drying the copper foil at 85 °C, performing cold pressing, cutting, and slitting, and then drying for 12 hours under a 120 °C vacuum condition to obtain a negative electrode.

In Embodiments 27 to 40, the content of the cyclic ether corresponding to 1 gram of silicon is controlled by adjusting the ratio of the artificial graphite to the alumina-coated SiO. The specific correspondence is shown in Table 3.

In Embodiments 41 to 43, carbon nanotubes (CNT) are used instead of conductive carbon black. The diameter of the carbon nanotubes is 1 nm to 2 nm. The specific length of the carbon nanotubes is shown in Table 4.

### (3) Preparing an electrolytic solution

Mixing ethylene carbonate (EC), propylene carbonate (PC), and diethyl carbonate (DEC) in a dry argon atmosphere glovebox at a weight ratio of EC: PC: DEC = 1: 2: 7, then adding fluoroethylene carbonate (FEC) and cyclic ether, dissolving and thoroughly stirring the mixture, and then adding lithium salt LiPF₆, and mixing the mixture evenly to obtain an electrolytic solution. The concentration of LiPF₆ is 1.05 mol/L. In the following table, the content of the fluoroethylene carbonate and the content of the cyclic ether are weight percent calculated based on the total weight of the electrolytic solution.

### (4) Preparing a separator

The separator is a 10 µm-thick polyethylene (PE) separator.

### (5) Preparing a lithium-ion battery

Stacking the positive electrode, the separator, and the negative electrode in such a sequence that the separator is located between the positive electrode and the negative electrode to serve an isolation function. Then winding the stacked plates to obtain a bare cell. Welding tabs, and then putting the bare cell into an outer package foil made of an aluminum plastic film. Performing drying, injecting the electrolytic solution prepared above, and performing steps such as vacuum sealing, standing, chemical formation (charging the cell at a constant current of 0.02 C until a voltage of 3.5 V, and then charging the cell at a constant current of 0.1 C until a voltage of 3.9 V), shaping, and capacity test to obtain a pouch-type lithium-ion battery (3.3 mm thick, 39 mm wide, and 96 mm long).

The lithium-ion batteries in some embodiments and some comparative embodiments of this application are all prepared according to the foregoing method.

### Test methods

### (1) Performing discharge cycles after the battery is fully charged and stored under a high temperature

Charging the chemically formed lithium-ion battery at a constant current of 0.5 C at 40 °C until the voltage reaches 4.45 V, then charging the battery at a constant voltage until the current reaches 0.05 C. Relocating the battery to a 40 °C environment to stand for 19.5 hours, and then discharging the battery at a constant current of 0.5 C at 40 °C until the voltage reaches 3.0 V, recording the discharge capacity after the 1^{st} cycle as D₀, and repeating the foregoing steps for 20 cycles; then charging the battery at a constant current of 0.5 C at 40 °C until the voltage reaches 4.40 V, then charging the battery at a constant voltage until the current reaches 0.05 C, and relocating the battery to 40 °C environment to stand for 19.5 hours, then discharging the battery at a constant current of 0.5 C at 40 °C until the voltage reaches 3.0 V, and repeating the foregoing steps for 20 cycles; then charging the battery at a constant current of 0.5 C at 40 °C until the voltage reaches 4.35 V, then charging the battery at a constant voltage until the current reaches 0.05 C, and relocating the battery to a 40 °C environment to stand for 19.5 hours, then discharging the battery at a constant current of 0.5 C at 40 °C until the voltage reaches 3.0 V, repeating the foregoing steps for 100 cycles, and recording the discharge capacity after the 140^{th} cycle as D₁.

The capacity retention rate at the end of the discharge cycle after the battery is fully charged and stored under a high temperature is calculated according to the following formula: capacity retention rate (%) = D₁/D₀×100%.

### (2) High-temperature cycle test

Charging the chemically formed lithium-ion battery at a constant current of 0.5 C and at 45 °C until the voltage reaches 4.45 V, then charging the battery at a constant voltage until the current reaches 0.05 C, and leaving the battery to stand for 5 minutes, and then discharging the battery at a constant current of 0.5 C until the voltage reaches 3.0 V, and recording the discharge capacity at the end of the first cycle as D'₀; then repeating the foregoing charge and discharge steps for 500 cycles, and recording the discharge capacity at the end of the 500^{th} cycle as D'₁.

The capacity retention rate in the high-temperature cycles is calculated according to the following formula: high-temperature capacity retention rate (%) = D'₁/D'₀×100%.

### (3) Room-temperature cycle test

Charging the chemically formed lithium-ion battery at a constant current of 0.5 C and at 25 °C until the voltage reaches 4.45 V, then charging the battery at a constant voltage until the current reaches 0.05 C, and leaving the battery to stand for 5 minutes, and then discharging the battery at a constant current of 0.5 C until the voltage reaches 3.0 V, and recording the discharge capacity at the end of the first cycle as D"₀; then repeating the foregoing charge and discharge steps for 700 cycles, and recording the discharge capacity at the end of the 700^{th} cycle as D"₁.

The capacity retention rate in the room-temperature cycles is calculated according to the following formula: room-temperature capacity retention rate (%) = D"₁/D"₀×100%.

### (4) Testing the specific surface area

The specific surface area of the negative active material is measured through nitrogen adsorption using a BET method. Drying a sample of the negative active material in a 120 °C vacuum oven for 2 hours before the test, and then testing the specific surface area by a six-point BET method (that is, P/P₀ = 0.05/0.10/0.15/0.2/0.25/0.3), where the nitrogen purity is 99.999%, and the temperature of liquid nitrogen is approximately -196 °C.

### (5) Testing the weight per unit area

Taking a piece of the negative electrode plate in which both sides of the current collector are coated with an active material, where the area of the piece of negative electrode plate is S. Scraping the negative active material layer off the negative current collector (scraping off the material other than the current collector). Weighing the powder of the scraped active material, and recording the weight as m. Weight per unit area = m/(S×2).

Alternatively, the weight per unit area may be measured by the following method:

Taking a piece of the negative electrode plate in which one side of the current collector is coated with an active material, where the area of the piece of negative electrode plate is Si. Scraping the negative active material layer off the negative current collector (scraping off the material other than the current collector). Weighing the powder of the scraped active material, and recording the weight as m₁. Weight per unit area = m₁/S₁.

### Test results

Table 1 shows the parameters and test results of the lithium-ion battery in Embodiments 1 to 19 and Comparative Embodiments 1 and 2.

**Table 1**

| | Content of FEC (A%) | Type of cyclic ether | Content of cyclic ether (B%) | BET (m²/g) | Weight per unit area (mg/cm²) | Unit reaction area C (m²/cm²) | (A+B)/C | Capacity retention rate |
|---|---|---|---|---|---|---|---|---|
| Embodiment 1 | 2% | 1-3 | 0.10% | 6.6 | 13 | 0.086 | 24 | 60.3% |
| Embodiment 2 | 5% | 1-3 | 0.50% | 6.6 | 6.82 | 0.045 | 122 | 64.9% |
| Embodiment 3 | 10% | 1-3 | 0.50% | 6.6 | 6.82 | 0.045 | 233 | 66.7% |
| Embodiment 4 | 13% | 1-3 | 0.50% | 6.6 | 6.82 | 0.045 | 300 | 68.9% |
| Embodiment 5 | 15% | 1-3 | 0.50% | 6.6 | 6.82 | 0.045 | 344 | 70.6% |
| Embodiment 6 | 15% | 1-1 | 0.50% | 6.6 | 6.82 | 0.045 | 344 | 71.3% |
| Embodiment 7 | 15% | 1-2 | 0.50% | 6.6 | 6.82 | 0.045 | 344 | 70.8% |
| Embodiment 8 | 15% | 1-4 | 0.50% | 6.6 | 6.82 | 0.045 | 344 | 71.4% |
| Embodiment 9 | 15% | 1-5 | 0.50% | 6.6 | 6.82 | 0.045 | 344 | 71.2% |
| Embodiment 10 | 15% | 1-8 | 0.50% | 6.6 | 6.82 | 0.045 | 344 | 70.0% |
| Embodiment 11 | 17% | 1-3 | 0.70% | 6.6 | 6.82 | 0.045 | 393 | 73.8% |
| Embodiment 12 | 20% | 1-3 | 0.70% | 6.6 | 6.82 | 0.045 | 460 | 74.5% |
| Embodiment 13 | 17% | 1-3 | 0.70% | 4.83 | 3.7 | 0.018 | 990 | 73.4% |
| Embodiment 14 | 20% | 1-3 | 0.70% | 4.83 | 3.7 | 0.018 | 1158 | 74.2% |
| Embodiment 15 | 22% | 1-3 | 0.70% | 4.83 | 3.7 | 0.018 | 1270 | 72.1% |
| Embodiment 16 | 20% | 1-3 | 0.70% | 4.5 | 2.7 | 0.012 | 1704 | 71.7% |
| Embodiment 17 | 25% | 1-3 | 0.70% | 4.5 | 2.7 | 0.012 | 2115 | 70.3% |
| Embodiment 18 | 25% | 1-3 | 1.50% | 4.5 | 2.5 | 0.011 | 2356 | 69.6% |
| Embodiment 19 | 25% | 1-3 | 3.00% | 4.5 | 2 | 0.009 | 3111 | 65.7% |
| Comparative Embodiment 1 | 1.5% | 1-3 | 0.008% | 7.3 | 14.5 | 0.106 | 14 | 35.7% |
| Comparative Embodiment 2 | 28% | 1-3 | 5.00% | 2.5 | 2 | 0.005 | 6600 | 40.5% |

As can be seen from Table 1, when the weight percent A% of the fluorocarbonate, the weight percent B% of the cyclic ether, and the unit reaction area C of the negative active material layer satisfy the relational expression 15 ≤ (A+B)/C ≤ 5600, the discharge cycle performance is improved significantly after the lithium-ion battery is fully charged and stored under a high temperature.

Table 2 shows the parameters and test results of the lithium-ion battery in Embodiment 5 and Embodiments 20 to 26.

**Table 2**

| | Content of FEC (A%) | Type of cyclic ether | Content of cyclic ether (B%) | BET (m²/g) | Weight per unit area (mg/cm²) | Unit reaction area (m²/cm²) | (A+B)/C | B/A | Capacity retention rate |
|---|---|---|---|---|---|---|---|---|---|
| Embodiment 5 | 15% | 1-3 | 0.50% | 6.6 | 6.82 | 0.045 | 344 | 0.03 | 70.6% |
| Embodiment 20 | 15% | 1-3 | 0.20% | 6.6 | 6.82 | 0.045 | 338 | 0.01 | 69.2% |
| Embodiment 21 | 15% | 1-3 | 0.70% | 6.6 | 6.82 | 0.045 | 349 | 0.05 | 72.4% |
| Embodiment 22 | 15% | 1-3 | 1.00% | 6.6 | 6.82 | 0.045 | 355 | 0.07 | 75.6% |
| Embodiment 23 | 15% | 1-3 | 1.50% | 4.5 | 2.7 | 0.0122 | 1358 | 0.10 | 74.9% |
| Embodiment 24 | 15% | 1-3 | 3.00% | 4.5 | 2 | 0.009 | 2000 | 0.20 | 72.7% |
| Embodiment 25 | 15% | 1-3 | 0.06% | 6.6 | 6.82 | 0.045 | 335 | 0.004 | 56.9% |
| Embodiment 26 | 3% | 1-3 | 3.00% | 6.6 | 6.82 | 0.045 | 133 | 1.00 | 54.8% |

As can be seen from comparison between Embodiment 5, Embodiments 20 to 24, and Embodiments 26 and 27, when the weight percent A% of the fluorocarbonate, the weight percent B% of the cyclic ether, and the unit reaction area C of the negative active material layer satisfy the relational expression 15 ≤ (A+B)/C ≤ 5600 and the ratio of B to A is 0.005 to 0.5, the discharge cycle performance is further enhanced after the lithium-ion battery is fully charged and stored under a high temperature. That may be because the fluorocarbonate can repair the SEI of the negative electrode during the cycles, but is prone to decompose under a high temperature to generate HF and deteriorate the battery performance, and the cyclic ether can form an effective protection film on the positive electrode and the negative electrode, so that the ratio between the cyclic ether and the fluorocarbonate falls within a specific range to achieve excellent discharge cycle performance after the battery is fully charged and stored in a high-temperature environment.

Table 3 shows the parameters and test results of the lithium-ion battery in Embodiments 27 to 40 and Comparative Embodiments 3 and 4.

**Table 3**

| | Content of FEC (A%) | Type of cyclic ether | Content of cyclic ether (B%) | Content of cyclic ether/silicon (Si) (g/g) | High-temperature capacity retention rate |
|---|---|---|---|---|---|
| Embodiment 27 | 15% | I-3 | 0.1% | 0.005 | 66.6% |
| Embodiment 28 | 17% | I-3 | 0.3% | 0.01 | 67.3% |
| Embodiment 29 | 13% | I-3 | 0.3% | 0.03 | 71.7% |
| Embodiment 30 | 13% | I-3 | 0.5% | 0.05 | 73.9% |
| Embodiment 31 | 13% | I-3 | 0.8% | 0.07 | 74.2% |
| Embodiment 32 | 13% | I-3 | 1.0% | 0.09 | 73.8% |
| Embodiment 33 | 13% | I-3 | 1.2% | 0.11 | 73.5% |
| Embodiment 34 | 13% | I-3 | 1.6% | 0.15 | 70.4% |
| Embodiment 35 | 13% | I-3 | 2.1% | 0.2 | 66.1% |
| Embodiment 36 | 13% | I-1 | 0.5% | 0.05 | 73.4% |
| Embodiment 37 | 13% | I-2 | 0.5% | 0.05 | 73.2% |
| Embodiment 38 | 13% | I-4 | 0.5% | 0.05 | 73.5% |
| Embodiment 39 | 13% | I-5 | 0.5% | 0.05 | 73.3% |
| Embodiment 40 | 13% | I-8 | 0.5% | 0.05 | 73.0% |
| Comparative Embodiment 3 | 13% | - | 0 | 0 | 32.5% |
| Comparative Embodiment 4 | 13% | I-3 | 3.5% | 0.32 | 40.7% |

| | | | | | |
|---|---|---|---|---|---|
| (The symbol "-" in Table 3 means that the substance is not added or not applicable) | | | | | |

As can be seen from comparison between Embodiments 28 to 40 and Comparative Embodiments 3 and 4, when the content of cyclic ether corresponding to 1 gram of silicon is 0.003 to 0.3 gram, the high-temperature cycle performance of the lithium-ion battery is enhanced significantly. That is because more cyclic ether is required to repair the interface when the silicon content increases.

Table 4 shows the parameters and test results of the lithium-ion battery in Embodiment 4 and Embodiments 41 to 43.

**Table 4**

| | Content of FEC (A%) | Type of cyclic ether | Content of cyclic ether (B%) | BET (m²/g) | Weight per unit area (mg/cm²) | Unit reaction area C (m²/cm²) | (A+B)/C | Length of CNT tube (µm) | Capacity retention rate | Room-temperature capacity retention rate |
|---|---|---|---|---|---|---|---|---|---|---|
| Embodiment 41 | 13% | 1-3 | 0.50% | 6.6 | 6.82 | 0.045 | 300 | 10 | 70.7% | 80.8% |
| Embodiment 42 | 13% | 1-3 | 0.50% | 6.6 | 6.82 | 0.045 | 300 | 15 | 70.9% | 81.4% |
| Embodiment 43 | 13% | 1-3 | 0.50% | 6.6 | 6.82 | 0.045 | 300 | 20 | 70.8% | 80.9% |
| Embodiment 4 | 13% | 1-3 | 0.50% | 6.6 | 6.82 | 0.045 | 300 | - | 68.9% | 70.4% |

| | | | | | | | | | | |
|---|---|---|---|---|---|---|---|---|---|---|
| (The symbol "-" in Table 4 means that the substance is not added or not applicable) | | | | | | | | | | |

As can be seen from comparison between Embodiments 41 to 43 with Embodiment 4, the use of CNTs can significantly improve the room-temperature cycle capacity retention rate. That may be because the CNTs can effectively link the negative active material, and can still maintain good electronic connections even when the silicon expands, thereby enhancing the kinetic performance of the negative electrode.

What is described above is merely several embodiments of this application, and is not intended to limit this application in any form. Although this application is disclosed above with reference to the exemplary embodiments, the exemplary embodiments are not intended to limit this application. Any modifications or improvements, which may be made by a person skilled in the art by using the foregoing technical content without departing from the scope of the technical solutions of this application, are treated as equivalents of this application, and fall within the scope of the technical solutions of this application.

References to "embodiments", "some embodiments", "an embodiment", "another example", "example", "specific example" or "some examples" throughout the specification mean that at least one embodiment or example in this application includes specific features, structures, materials, or characteristics described in the embodiment(s) or example(s). Therefore, descriptions throughout the specification, which make references by using expressions such as "in some embodiments", "in an embodiment", "in one embodiment", "in another example", "in an example", "in a specific example", or "example", do not necessarily refer to the same embodiment or example in this application. In addition, specific features, structures, materials, or characteristics herein may be combined in one or more embodiments or examples in any appropriate manner.

Although some illustrative embodiments have been demonstrated and described above, a person skilled in the art understands that the above embodiments are not to be construed as a limitation on this application, and changes, replacements, and modifications may be made to some embodiments without departing from the spirit, principles, and scope of this application.

## Claims

1. An electrochemical device, comprising a positive electrode, a negative electrode, a separator, and an electrolytic solution, wherein the negative electrode comprises a negative active material layer, the negative active material layer comprises a silicon material, and a unit reaction area of the negative active material layer is C m²/cm²,
wherein the electrolytic solution comprises fluorocarbonate and cyclic ether, and, based on a total weight of the electrolytic solution, a weight percent of the fluorocarbonate is A%, and a weight percent of the cyclic ether is B%,
wherein, A, B, and C satisfy 15 ≤ (A+B)/C ≤ 5600.

2. The electrochemical device according to claim 1, wherein A% is 2% to 25%, and B% is 0.05% to 3%.

3. The electrochemical device according to claim 1, wherein B/A is 0.005 to 0.5.

4. The electrochemical device according to claim 1, wherein the cyclic ether comprises a compound represented by Formula I: 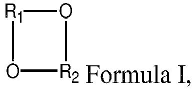 wherein R₁ and R₂ each are independently selected from substituted or unsubstituted C₁ to C₁₀ alkylidenes, in which a substituent for substitution is at least one selected from a halogen atom or a C₁ to C₅ alkyl.

5. The electrochemical device according to claim 4, wherein the cyclic ether comprises at least one of:

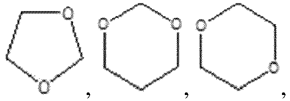

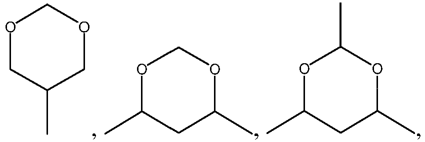

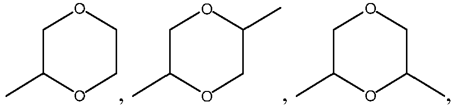

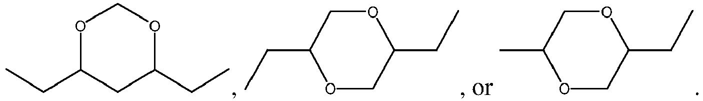

6. The electrochemical device according to claim 1, wherein the fluorocarbonate comprises at least one of fluoroethylene carbonate or bisfluoroethylene carbonate.

7. The electrochemical device according to claim 1, wherein content of the cyclic ether corresponding to 1 gram of silicon in the negative active material layer is 0.003 gram to 0.3 gram.

8. The electrochemical device according to claim 1, wherein the silicon material comprises a silicon composite substrate and a protection layer, and the protection layer is disposed on at least a part of a surface of the silicon composite substrate.

9. The electrochemical device according to claim 8, wherein the protection layer comprises at least one of carbon or MeₓO_{y}, wherein Me comprises at least one of Al, Si, Ti, Mn, V, Cr, Co, or Zr; x is 1 to 3; and y is 1 to 3.

10. The electrochemical device according to claim 8, wherein the silicon composite substrate comprises at least one of silicon oxide or silicon.

11. The electrochemical device according to claim 8, wherein the silicon composite substrate comprises SiO_{z}, wherein 0.5 < z < 1.5.

12. The electrochemical device according to claim 8, wherein a thickness of the protection layer is 1 nm to 900 nm.

13. The electrochemical device according to claim 1, wherein the negative active material layer comprises carbon nanotubes, a diameter of the carbon nanotubes is 1 nm to 10 nm, and a length of the carbon nanotubes is 1 µm to 50 µm.

14. An electronic device, comprising the electrochemical device according to any one of claims 1 to 13.
